(19) Europäisches Patentamt
European Patent Office
Office européen des brevets

(11) Veröffentlichungsnummer: **0 524 417 A1**

# (12) EUROPÄISCHE PATENTANMELDUNG

(21) Anmeldenummer: **92110020.2**

(51) Int. Cl.[5]: **C09D 183/06**, C08K 5/00

(22) Anmeldetag: **13.06.92**

(30) Priorität: **10.07.91 DE 4122743**

(43) Veröffentlichungstag der Anmeldung:
**27.01.93 Patentblatt 93/04**

(84) Benannte Vertragsstaaten:
**AT BE CH DE DK ES FR GB IT LI LU NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Arpac, Ertugrul, Prof. Dr.**
**Akdeniz Üniversitesi Fen. Edebiyat Fakültesi**
**Antalya(TR)**
Erfinder: **Greiwe, Klaus, Dr.**
**Bronnbachergasse 19 a**
**W-8700 Würzburg(DE)**
Erfinder: **Glaubitt, Walther**
**Gablonzer Weg 16**
**W-8707 Veitshöchheim(DE)**
Erfinder: **Amberg-Schwab, Sabine, Dr.**
**Oberer Steinbachweg 40**
**W-8700 Würzburg(DE)**

## (54) Verfahren und Beschichtungsmasse zur Herstellung von UV- oder UV/IR oder IR/UV-gehärteten Beschichtungen.

(57) Die Erfindung betrifft ein Verfahren zur Herstellung von UV- oder UV/IR- bzw. IR/UV-gehärteten Beschichtungen auf Substraten durch Auftragen einer Beschichtungsmasse auf das zu beschichtende Substrat und durch Einwirkung von UV-Strahlung oder von kombinierter UV/IR- bzw. IR/UV-Strahlung, sowie UV- oder UV/IR bzw. IR/UV härtbare Beschichtungsmassen zur Verwendung in diesem Verfahren. Die erfindungsgemäße Beschichtungsmasse besteht aus einer Komponente A, welche eine Lösung einer komplexierten, metallorganischen Ti- oder Zr-Verbindung mit polymerisierbaren Liganden darstellt, aus einer Komponente B, welche ein Hydrolysat eines oder mehrerer radikalisch polymerisierbarer Alkoxysilane der allgemeinen Formel

$$SiR_n(R^1-O-\underset{\underset{O}{\|}}{C}-\underset{\underset{R^2}{|}}{C}=CH_2)_{4-n}$$

(II) darstellt, aus 0.1 bis 5 Gew.-% einer Komponente C, welche einen Initiator für die Polymerisation darstellt, und gegebenenfalls aus üblichen Additiven, wobei das molare Verhältnis von hydrolysierbarer Verbindung (II) zu komplexierter Ti- oder Zr-Verbindung zwischen 10:4 und 10:0.1 liegt.

EP 0 524 417 A1

Die Erfindung betrifft ein Verfahren zur Herstellung von UV- oder UV/IR- oder IR/UV-gehärteten Beschichtungen auf Substraten durch Auftragen einer Beschichtungsmasse auf das zu beschichtende Substrat und durch Einwirkung von UV-Strahlung oder von kombinierter UV/IR- oder kombinierter IR/UV-Strahlung auf das beschichtete Substrat, sowie UV- oder UV/IR bzw. IR/UV härtbare Beschichtungsmassen zur Verwendung in diesem Verfahren.

Zahlreiche Gegenstände, insbesondere Gegenstände aus Kunststoffen, müssen mit kratzfesten Beschichtungen versehen werden, da ihre Kratzempfindlichkeit ansonsten keinen praktischen Einsatz oder nur kurze Einsatzzeiten ermöglichen würde. Obwohl vor allem in den letzten Jahren eine Reihe von kratzfesten Beschichtungsmaterialien entwickelt wurde, ist immer noch Raum für Verbesserungen, insbesondere hinsichtlich Kratzbeständigkeit, Abriebfestigkeit bzw. Haftung auf dem Substrat und optische Transparenz bei geeigneter Schichtdicke. Eine weitere verbesserungsfähige Eigenschaft der bekannten Beschichtungsmaterialien ist deren Aushärtzeit. Die Aushärtung erfolgt in der Regel thermisch und/oder durch Bestrahlung, wobei in den meisten Fällen thermische bzw. photochemische Härtungskatalysatoren zugesetzt werden.

Schließlich dringen insbesondere transparente Kunststoffteile zunehmend in Anwendungsbereiche vor, die bisher anorganischen Gläsern vorbehalten waren. Die Verwendung dieser Kunststoffteile in diesen Bereichen setzt aber voraus, daß die weiche Kunststoffoberfläche wirksam vergütet werden kann, ohne daß dabei die Lichtdurchlässigkeit der Kunststoffteile merklich beeinträchtigt wird.

Thermisch aushärtbare Beschichtungsmaterialien für Kunststoffoberflächen auf Polysiloxan-Basis, die zu verbesserten mechanischen Eigenschaften wie Kratzfestigkeit und Abriebbeständigkeit führen, werden bereits kommerziell genutzt. Die Anwendung dieser Beschichtungsmaterialien wird jedoch durch die geringe thermische Beständigkeit der organischen Polymerwerkstoffe eingeschränkt. Für thermisch wenig belastbare thermoplastische Kunststoffe wie beispielsweise PMMA, ABS, PS, PVC, PUR, PE etc. sind daher UV-härtbare Beschichtungsmaterialien aufgrund ihrer schnelleren Aushärtung und ihrer geringeren thermischen Belastung besonders geeignet.

Kratzfeste Materialien, insbesondere kratzfeste Beschichtungen, auf der Basis anorganisch-organischer Polymerer bzw. organisch modifizierter Kieselsäureester sind seit einigen Jahren bekannt und werden in einigen Fällen auch schon im industriellen Maßstab gefertigt. Im Vergleich zu rein organischen Beschichtungssystemen zeigen siloxanhaltige Lackformulierungen, die durch Umsetzung von hydrolysierbaren Siliciumverbindungen mit Wasser oder Wasser abspaltenden Mitteln hergestellt wurden, ein deutlich besseres Abriebverhalten und eine höhere Kratzfestigkeit.

In der DE 39 17 535 A1 und in der EP 0 171 493 A2 werden Verfahren zur Herstellung kratzfester Beschichtungen beschrieben, bei denen ein Lack, der erhalten worden ist durch hydrolytische Vorkondensation einer Titan- oder einer Zirkonverbindung und eines organofunktionellen Silans sowie gegebenenfalls eines schwerflüchtigen Oxids eines Elementes der Hauptgruppen Ia bis Va oder der Nebengruppen IVb oder Vb des Periodensystems oder einer Verbindung, die unter den Reaktionsbedingungen ein derartiges Oxid bildet, auf ein Substrat aufgebracht und gehärtet wird. Hier werden thermisch härtbare Beschichtungsmaterialien beschrieben, zu deren Herstellung ein aufwendiger, mehrstufiger Hydrolyse-Prozeß erforderlich ist, in dem mehr Wasser zugesetzt wird, als zur Hydrolyse aller Alkoxygruppen formal nötig ist.

In der US-PS 4,754,012 werden mehrkomponentige Sol-Gel-Schutzbeschichtungssysteme beschrieben, in denen organofunktionelle Alkoxysilane zusammen mit Metallalkoxiden zu einem kratzfesten Beschichtungsmaterial verarbeitet werden. Nach der Applikation der Beschichtungsmaterialien auf Polycarbonatscheiben werden die Proben jedoch thermisch (2 Stunden, 130 °C) ausgehärtet.

In der US-PS 4,753,827 werden ebenfalls mehrkomponentige Sol-Gel-Schutzbeschichtungssysteme beschrieben, in denen organofunktionelle Alkoxysilane zusammen mit Metallalkoxiden zu einem kratzfesten Beschichtungsmaterial verarbeitet werden. Nach der Applikation der Beschichtungsmaterialien auf Polycarbonatscheiben werden die Proben jedoch thermisch (2 bis 3 Stunden, 130 °C) gehärtet. Außerdem werden die beschriebenen Beschichtungsversuche mit Polycarbonatscheiben durchgeführt, die vor der Applikation des Lackes mit einem Haftvermittler versehen worden sind.

Nachteil all dieser Beschichtungsmaterialien auf der Basis hydrolysierbarer, organisch modifizierter Silane ist jedoch die Tatsache, daß sie nicht oder nur unzureichend durch UV-Bestrahlung gehärtet werden können, und daß in einigen Fällen zusätzlich der Einsatz eines Haftvermittlers erforderlich ist.

In der EP 0 383 074 A2 wird ein durch Bestrahlen härtbares Beschichtungsmaterial beschrieben, das zu transparenten, abriebbeständigen und färbbaren Beschichtungen führt. Dabei wird allerdings die Kratzfestigkeit der Beschichtung durch Zugabe von kolloidalem $SiO_2$ eingestellt. Das vorgefertigte, kolloidale $SiO_2$ wird dabei als Füllstoff zur Erhöhung der Kratzfestigkeit in die Beschichtungslösung eindispergiert und nicht wie in einem Sol-Gel-Verfahren üblich, während der Herstellung der Beschichtungslösung erst durch Hydrolyse der entsprechenden Ausgangsverbindungen in situ gebildet und in das Polysiloxan-Netzwerk auf molekularer Ebene eingebunden. Damit ergeben sich Probleme, das $SiO_2$ gleichmäßig in der Gegenwart organischer Verbindungen in der Beschichtungslösung zu verteilen und zu einer gleichmäßigen Benetzung des Füllstoffes mit den organischen Verbindungen zu kommen. Dies führt zu Störungen bei der Benetzung des Substrates und so zu Schwankungen in der optischen Qualität der ausgehärteten Beschichtung.

In der CA-PS 1 207 932 wird ein durch Bestrahlen härtbares Beschichtungsmaterial beschrieben, das zu abriebbeständigen und transparenten Beschichtungen führt. Dazu wird u.a. kolloidales $SiO_2$ eingesetzt, das durch hydrolysierbare Alkoxysilane hydrophobiert wird. Auch hier ist das $SiO_2$ nur in dem resultierenden Netzwerk suspendiert, und auch hier besteht die Gefahr einer ungleichmäßigen Verteilung und Benetzung des kolloidalen $SiO_2$ in der Beschichtungslösung mit den bekannten Nachteilen für die optische Qualität.

Aus der DE-AS 25 44 860 ist ein Verfahren zur Herstellung abriebbeständiger Überzüge auf Kunststoff- oder Metallsubstraten bekannt. Dazu wird eine Beschichtungsmasse aus einem Gemisch aus einem Metallester (Al, Ti oder Zr), einem Epoxy- und/oder Acryloxysilan und gegebenenfalls aus üblichen Zusätzen oder Füllstoffen auf das Substrat aufgetragen und thermisch oder durch UV-Bestrahlung oder durch Elektronenstrahlen gehärtet. Bei diesem Verfahren besteht aber die Gefahr, daß durch die Hydrolyse der Metallester das Metall als unlöslicher Niederschlag ausfällt. Daher können auf diese Weise keine stöchiometrisch exakt definierten, beschichtungsfähigen Lacke erhalten werden, die im ausgehärteten Zustand zu abriebbeständigen Beschichtungen führen.

In der DE 31 00 675 A1 wird ein beschichteter, geformter Gegenstand aus Kunstharzen vom Polycarbonat-Harz-Typ beschrieben, sowie ein Verfahren zu dessen Herstellung. Dabei wird auf den Gegenstand zunächst eine Grundierung aufgetragen und ausgehärtet, und dann erst auf die gehärtete Grundierung die eigentliche Kratzfestbeschichtung aufgebracht. Diese Kratzfestbeschichtung besteht aus hydrolysierbaren Si-Verbindungen und einem Härtungskatalysator, wobei auch organische Ti-Verbindungen zugesetzt werden können. Die Aushärtung der Kratzfestbeschichtung erfolgt jedoch durch Erwärmen. Ein weiterer Nachteil des hier beschriebenen Verfahrens besteht in der Tatsache, daß zwischen dem Substrat und der Kratzfestbeschichtung eine Grundierung aufgetragen und ausgehärtet werden muß. Dazu sind zusätzliche Verfahrensschritte erforderlich, die aufwendig sind und die die Produktionskosten erhöhen.

Es sind auch durch UV-Bestrahlung härtbare Beschichtungszusammensetzungen auf der Basis von Acrylaten und/oder von Methacrylaten bekannt. So werden z.B. in der EP 0 323 560 A2, in der US-PS 4,600,649, in der DE 36 16 176 A1 und in der DE 39 32 460 A1 abriebbeständige, durch UV-Strahlung härtbare Beschichtungen auf der Basis von Acrylaten und/oder von Methacrylaten beschrieben. Nachteil dieser Beschichtungsmaterialien ist allerdings die Tatsache, daß sie geringere Abriebfestigkeiten zeigen, als z.B. Siloxan-Beschichtungen. Außerdem ist die Viskosität solcher Beschichtungslösungen in der Regel zu hoch, um z.B. eine Schleuderbeschichtung auf planaren Substraten zu ermöglichen.

Eine Substitution der bisher verwendeten UV-aushärtbaren Lacke ist deshalb wünschenswert, da deren Kratzfestigkeit und Abriebbeständigkeit nicht immer allen Ansprüchen genügt.

Aufgabe der vorliegenden Erfindung ist es deshalb, ein Verfahren zur Verfügung zu stellen, mit dem UV-aushärtbare Beschichtungen mit hoher Kratzfestigkeit, hoher Abriebbeständigkeit, hoher Haftfestigkeit und hoher optischer Transparenz hergestellt werden können. Ferner soll es möglich sein, Substrate, insbesondere metallische oder solche aus Kunststoffen, mit einer Beschichtung der oben genannten Eigenschaften versehen zu können, ohne daß das zu beschichtende Substrat mit einer Grundierung vorbehandelt werden muß. Die Beschichtungen sollen insbesondere auf Formkörpern aus Kunststoffen, wie z.B. aus Polycarbonat, über eine sehr gute Haftung verfügen. Ferner sollen die Beschichtungen mit so kurzen UV-Kontaktzeiten gehärtet werden können, daß das Beschichtungsverfahren problemlos in bestehende Produktionsverfahren integriert werden kann (in-line-Fertigung mit kurzen Taktzeiten). Ferner soll es möglich sein, thermisch vorgehärtete Beschichtungen durch UV-Strahlung nachträglich auszuhärten. Auch soll eine der thermischen Aushärtung vorgeschaltete Härtung mittels UV-Strahlung möglich sein.

Aufgabe der vorliegenden Erfindung ist es deshalb auch, UV-aushärtbare Beschichtungsmaterialien zur Verfügung zu stellen, die zu Beschichtungen mit den oben genannten Eigenschaften führen.

Ferner soll es möglich sein, die für die Beschichtung von planaren Substraten erforderliche Viskosität des Beschichtungsmaterials so einstellen zu können, daß eine Schleuder- bzw. eine Tauchschleuderbeschichtung möglich ist. Insbesondere soll es möglich sein, Datenträger aus Polycarbonat (Compact discs etc.), magnetooptische Datenspeicher (MOs), Bildplatten, etc. mit einer transparenten, kratzfesten und abriebbeständigen Beschichtung versehen zu können, die durch UV-Strahlung mit kurzen Kontaktzeiten ausgehärtet werden kann.

Diese Aufgabe wird erfindungsgemäß dadurch gelöst, daß man eine Beschichtungsmasse verwendet, die

aus einer Komponente A,

welche eine Lösung einer komplexierten, metallorganischen Verbindung mit polymerisierbaren Liganden darstellt, und welche erhalten werden kann durch Umsetzen, gegebenenfalls in einem inerten Lösungsmittel, einer metallorganischen Verbindung der allgemeinen Formel (I),

$MR_4$ (I)

in der die Reste R gleich oder verschieden sein können, M = Ti oder Zr und R = Hal, OH, OR' oder O-$(CH_2$-$CH_2O$-$)_m$R' bedeuten, mit m = 1 bis 3, Hal = Cl oder Br, und R' = Alkyl, Alkenyl, Alkinyl oder Acyl, jeweils mit 1 bis 18, bevorzugt mit 1 bis 6 und ganz besonders bevorzugt mit 1 bis 4 C-Atomen,
mit einem oder mehreren einfach oder mehrfach ethylenisch ungesättigten Chelatbildnern, die über mindestens 2 Sauerstoff-Donoratome verfügen, und die in einer Menge von 0.5 bis 10 Mol, bevorzugt von 1 bis 2.5 Mol, bezogen auf 1 Mol $MR_4$ als Komplexbildner eingesetzt werden,
aus einer Komponente B,
welche ein Hydrolysat eines oder mehrerer radikalisch polymerisierbarer Alkoxysilane darstellt, und welches erhalten werden kann durch Hydrolyse eines oder mehrerer radikalisch polymerisierbarer Alkoxysilane der allgemeinen Formel (II)

$$SiR_n(R^1-O-\underset{\underset{O}{\|}}{C}-\underset{\underset{R^2}{|}}{C}=CH_2)_{4-n} \qquad (II)$$

mit n = 2 oder 3, in der die Reste R, $R^1$ und $R^2$ jeweils gleich oder verschieden sein können, R die gleiche Bedeutung wie in Formel (I) hat, $R^1$ einen Alkylenrest mit 1 bis 8 C-Atomen, und $R^2$ ein H-Atom oder einen Kohlenwasserstoffrest, vorzugsweise einen Alkylrest, mit 1 bis 8 C-Atomen darstellt,

indem die Hydrolyse, gegebenenfalls in einem inerten Lösungsmittel, mit einer geringeren, aber mindestens der halben, zur vollständigen Hydrolyse aller Alkoxy-Gruppen erforderlichen Wassermenge durchgeführt wird,
aus 0.1 bis 5 Gew.-% einer Komponente C,

welche einen Initiator für die Polymerisation darstellt,
und gegebenenfalls aus üblichen Additiven besteht,
wobei die Mengen der Komponenten A und B in der Beschichtungsmasse so gewählt sind, daß das molare Verhältnis von hydrolysierbarer Verbindung (II) zu komplexierter Verbindung $MR_4$ zwischen 10:4 und 10:0.1, bevorzugt zwischen 10:2.5 und 10:0.5 liegt.

Überraschenderweise wurde festgestellt, daß das erfindungsgemäße Beschichtungsverfahren zu Beschichtungen führt, die außerordentlich kratzfest, abriebbeständig, haftfest, transparent und schwitzwasserstabil sind. Die erfindungsgemäßen Beschichtungsmassen können entweder allein durch UV-Bestrahlung gehärtet werden, oder aber auch durch eine kombinierte UV-/IR-Bestrahlung. Wird die Härtung allein durch UV-Bestrahlung durchgeführt, so bieten die erfindungsgemäßen Beschichtungsmassen den großen Vorteil, daß hierfür nur sehr kurze UV-Standzeiten erforderlich sind. Wird eine kombinierte UV/IR-Härtung durchgeführt, so ist es möglich, entweder zuerst die Beschichtung thermisch vorzuhärten und anschliessend durch UV- Bestrahlung vollständig auszuhärten, oder aber zuerst durch UV-Bestrahlung vorzuhärten und dann thermisch auszuhärten. Diese kombinierte UV/IR-Härtung ist besonders geeignet für pigmentierte Beschichtungssysteme, da Pigmente häufig UV-Strahlung absorbieren und somit hier im "Lichtschatten" der Pigmente eine IR-Härtung der Beschichtung möglich ist.

Überraschenderweise wurde festgestellt, daß durch die Menge des Chelatbildners in der Komponente A die Härte und die Haftung der resultierenden Beschichtung beeinflußt und den Erfordernissen des jeweiligen Anwendungsfalles angepaßt werden kann.

Durch die Zugabe des Chelatbildners zur metallorganischen Verbindung $MR_4$ wird die Hydrolysegeschwindigkeit der resultierenden, komplexierten metallorganischen Verbindung reduziert. Dadurch erhält man eine gleichmäßige Verteilung der einzelnen Komponenten in der resultierenden Matrix. Die Zugabe des Chelatbildners zur metallorganischen Verbindung $MR_4$ bzw. die Überführung der metallorganischen Verbindung $MR_4$ in einen Chelatkomplex verhindert, daß das Metall während der Hydrolyse als Oxid bzw. als Hydroxid ausfällt und zu inhomogenen, milchig-trüben Beschichtungen führt.

Mit dem erfindungsgemäßen Beschichtungsverfahren können Substrate aus den unterschiedlichsten Materialien beschichtet werden. So können z.B. eine Vielzahl von Kunststoffen bzw. Substrate aus einer Vielzahl von organischen Polymeren beschichtet werden, oder aber auch metallisierte Kunststoffe oder Metalle. Spezielle Beispiele und bevorzugte Ausführungsformen für organische Polymere sind Polycarbonat

(PC), Polystyrol (PS), Polymethylmethacralyt (PMMA), Acryl-Butadien-Styrol (ABS), Polyvinylchlorid (PVC), Polyurethan (PUR), Polyethylen (PE) oder Polyethylenterephthalat (PET). Spezielle Beispiele für metallisierte Kunststoffe oder Metalle sind mit Aluminium bedampftes PC, mit Aluminium bedampftes PMMA, metallisierte (besputterte) Polyesterfolien oder Aluminium.

Mit den erfindungsgemäßen Beschichtungsverfahren ist es möglich geworden, sogar solche Kunststoffe ganz ohne Einsatz einer Grundierung bzw. eines Haftvermittlers mit einer gut haftenden, kratzfesten Beschichtung versehen zu können, die nach herrschender Meinung wegen mangelnder Haftung nur schlecht mit kratzfesten Schutzschichten zu beschichten sind. Solche Kunststoffe sind z.B. Polystyrol (PS), Polymethylmethacrylat (PMMA) oder auch Polycarbonat (PC). Gemäß dem Stand der Technik müssen diese Kunststoffe vor dem Beschichten mit einem Haftvermittler versehen werden.

Ein weiterer Vorteil der erfindungsgemäßen Beschichtungsmassen besteht darin, daß die zu beschichtenden Substrate vor dem Beschichten keiner Vorbehandlung unterzogen werden müssen. So entfallen Vorbehandlungen wie z.B. eine Entfettung, eine Coronabehandlung oder Reinigungsbäder. Es wird angenommen, daß die erfindungsgemäße Beschichtungsmasse die Reinigung des Substrates übernimmt, d.h. daß die erfindungsgemäße Beschichtungsmasse über Lösungseigenschaften verfügt, und daß dadurch eine Vorbehandlung bzw. Reinigung der Substrate nicht erforderlich ist.

Die erfindungsgemäße Beschichtungsmasse stellt einen Zweikomponenten-Lack dar, dessen eine Hauptkomponente aus einer komplexierten, metallorganischen Verbindung mit polymerisierbaren Liganden besteht, und dessen zweite Hauptkomponente ein Hydrolysat eines radikalisch polymerisierbaren Alkoxysilans darstellt. Weitere Bestandteile der erfindungsgemäßen Beschichtungsmasse sind Initiatoren für die Polymerisation und gegebenenfalls weitere übliche Additive, wie z.B. Füllstoffe oder Pigmente. Die Komponenten A und B sind getrennt gehalten lagerstabil, wenn sie keinen zu hohen Temperaturen und keiner UV-Strahlung ausgesetzt werden. Für die Lagerstabilität der Komponente A ist ferner erforderlich, daß diese unter Ausschluß von Wasser gehalten wird, da anderenfalls eine vorzeitige Hydrolyse der komplexierten, metallorganischen Verbindung einsetzt.

Wenn die Komponenten A und B zusammengegeben und gut vermischt werden, bewirkt der in der Komponente B enthaltene Restwassergehalt eine Hydrolyse und Kondensation der komplexierten, metallorganischen Verbindung, wobei der Chelatligand unter diesen Bedingungen nicht abgespalten wird. Die endgültige Härtung erfolgt dann durch Polymerisation der monomer eingesetzten polymerisierbaren Liganden und Komponenten. Die für die Polymerisation erforderliche Aktivierungsenergie kann in Form von UV-Strahlung und/oder in Form von IR-Strahlung (Wärme) zugegeben werden. Gegebenenfalls ist es erforderlich, vor der eigentlichen Härtung durch UV-Strahlung die Beschichtung thermisch zu trocknen, um die durch die Hydrolyse bzw. durch die Kondensation freigesetzten Alkohole zu entfernen. Eine thermische Vortrocknung führt auch zu verbesserten Verlaufseigenschaften der aufgebrachten Beschichtung.

Bei den komplexierten, metallorganischen Verbindungen handelt es sich um Titan- oder Zirkonverbindungen. Die Wahl des entsprechenden Metalls richtet sich dabei nach den Erfordernissen des jeweiligen Anwendungsfalles. Die erfindungsgemässen Titan-Lacke sind härter als die analogen Zirkon-Lacke, wogegen die Zirkon-Lacke eine höhere Stabilität gegenüber UV-Strahlung zeigen als die analogen Titan-Lacke.

Die komplexierten, polymerisierbare Liganden enthaltenden, metallorganischen Titan- oder Zirkon-Verbindungen können erhalten werden, in dem man Titan- oder Zirkon-Verbindungen der allgemeinen Formel $MR_4$ (M = Ti, Zr) mit mehrfach ethylenisch ungesättigten Chelatbildnern, die über mindestens zwei Sauerstoff-Donoratome verfügen, umsetzt und dadurch in einen Chelatkomplex überführt. Die Liganden R des Metalls sind hydrolysierbar und haben die oben genannte Bedeutung, wobei für R = OH die Hydrolyse quasi schon stattgefunden hat. Enthalten die Liganden R Kohlenwasserstoff-Reste, so können diese entweder verzweigt, unverzweigt oder cyclisch sein. Bevorzugt werden Kohlenwasserstoff-Reste mit 1 bis 4 Kohlenstoff-Atomen, es sind aber auch solche mit 1 bis 18 Kohlenstoff-Atomen möglich. Enthalten die Liganden R Kohlenwasserstoff-Reste mit einer hohen Zahl von Kohlenstoff-Atomen, so wirkt der bei der Hydrolyse abgespaltene Alkohol als internes Verlaufsmittel, welches die Verlaufseigenschaften der erfindungsgemäßen Beschichtungsmasse vorteilhaft beeinflußt.

Die Kohlenwasserstoff-Reste R' in den Liganden R können Alkyl-, Alkenyl-, Alkinyl- oder Acyl-Reste sein. Die Alkyl-Reste bedeuten z.B. geradkettige, verzweigte oder cyclische Reste mit 1 bis 18 Kohlenstoff-Atomen und insbesondere niedere Alkyl-Reste mit 1 bis 6, vorzugsweise mit 1 bis 4 Kohlenstoff-Atomen. Spezielle Beispiele für Alkyl-Reste sind Methyl, Ethyl, n-Propyl, i-Propyl, n-Butyl, s-Butyl, t-Butyl, i-Butyl, n-Pentyl, n-Hexyl und Cyclohexyl.

Die Alkenyl-Reste sind z.B. geradkettige, verzweigte oder cyclische Reste mit 1 bis 18 Kohlenstoff-Atomen und insbesondere niedere Alkenyl-Reste wie z.B. Vinyl, Allyl oder 2-Butenyl.

Spezielle Beispiele für Zirkon-Verbindungen $ZrR_4$ sind $ZrCl_4$, $Zr(O\text{-}i\text{-}C_3H_7)_4$, $Zr(OC_4H_9)_4$, Zr-(acetylacetonato)$_4$, spezielle Beispiele für Titan-Verbindungen $TiR_4$ sind $TiCl_4$, $Ti(OC_2H_5)_4$, $Ti(OC_3H_7)_4$, Ti-

$(O\text{-}i\text{-}C_3H_7)_4$, $Ti(OC_4H_9)_4$, $Ti(acetylacetonato)_2(O\text{-}i\text{-}C_3H_7)_2$, $Ti(2\text{-}ethylhexoxy)_4$.

Bei der Überführung der metallorganischen Verbindung $MR_4$ mittels eines Chelatbildners in einen Chelatkomplex werden in Abhängigkeit von der zugegebenen Menge des Chelatbildners durch die Chelatliganden zusätzliche Koordinationsstellen des Zentralatoms besetzt und/oder es werden Liganden R verdrängt. Erfindungsgemäß werden Chelatbildner eingesetzt, die einfach oder mehrfach ethylenisch ungesättigt sind und die über mindestens zwei Sauerstoff-Donor-Atome verfügen. Bevorzugt werden einfach oder mehrfach ethylenisch ungesättigte $\beta$-Diketone, Carbonsäuren und Glykole. Besonders bevorzugt werden Acrylsäure- oder Methacrylsäure-Derivate als Chelatbildner eingesetzt. Spezielle Beispiele für Chelatbildner sind Acrylsäure, Methacrylsäure und Acetessigsäureallylester.

Der Chelatbildner wird in einer Menge von 0.5 bis 10 Mol, bevorzugt von 1 bis 2.5 Mol, bezogen auf ein Mol $MR_4$ eingesetzt. Die Umsetzung kann in einem inerten Lösungsmittel durchgeführt werde, oder aber auch ohne Lösungsmittel. Es ist auch möglich, die Viskosität der resultierenden Komponente A durch Zugabe eines inerten Lösungsmittels auf die Erfordernisse des jeweiligen Anwendungsfalles einzustellen.

Ferner ist es möglich, durch die Wahl und/oder durch die Menge des zugesetzten Chelatbildners das Eigenschaftsprofil der resultierenden Beschichtung zu beeinflussen und den Erfordernisssen des jeweiligen Anwendungsfalles anzupassen.

Die zweite Hauptkomponente des 2-Komponenten-Lackes, die Komponente B, stellt ein Hydrolysat eines radikalisch polymerisierbaren Alkoxysilans der allgemeinen Formel (II) dar. Dieses Hydrolysat wird erhalten, indem man das Alkoxysilan der Formel (II) mit Wasser zur Reaktion bringt. Die dazu erforderliche Wassermenge ist mindestens halb so groß, wie diejenige, die für die vollständige Hydrolyse aller hydrolysierbaren Gruppen theoretisch erforderlich ist, aber geringer, als die theoretisch erforderliche Menge. Wird z.B. als hydrolysierbares Alkoxysilan 3-Methacryloxypropyltrimethoxysilan (MEMO) eingesetzt, so ist die für die Hydrolyse bevorzugte Wassermenge 1.9 mol pro Mol MEMO.

Die Hydrolyse kann in Abhängigkeit von der Konsistenz der Ausgangsverbindungen und von der für die Beschichtung erforderlichen Viskosität ohne Lösungemittel oder in einem inerten Lösungsmittel durchgeführt werden. Die Zugabe eines Lösungsmittels ist deshalb nicht erforderlich, weil bei der Hydrolyse Lösungsmittel in Form der abgespaltenen Verbindungen ROH produziert werden. Durch Zugabe eines inerten Lösungsmittels kann die Viskosität der Komponente B auf die für den jeweiligen Einsatzfall erforderlichen Werte eingestellt werden.

Überraschenderweise wurde festgestellt, daß unter den Bedingungen des erfindungsgemäßen Verfahrens das Hydrolysat des Alkoxysilans (II) lagerstabil ist.

Spezielle Beispiele für polymerisierbare und hydrolysierbare Alkoxysilane der allgemeinen Formel (II) sind 3-Methacryloxypropyltrimethoxysilan (MEMO), 3-Acryloxypropyltrimethoxysilan, 2-Methacryloxyethyltrimethoxysilan, 2-Acryloxyethyltrimethoxysilan, 3-Methacryloxypropyltriethoxysilan, 3-Acryloxypropyltriethoxysilan, 2-Methacryloxyethyltriethoxysilan, 2-Acryloxyethyltriethoxysilan, 3-Methacryloxypropyltris-(methoxyethoxy)silan, 3-Methacryloxypropyltris(butoxyethoxy)silan, 3-Methacryloxypropyltris(propoxy)silan, 3-Methacryloxypropyltris(butoxy)silan, 3-Acryloxypropyltris(methoxyethoxy)silan, 3-Acryloxypropyltris-(butoxyethoxy)silan, 3-Acryloxypropyltris(propoxy)silan, 3-Acryloxypropyltris(butoxy)silan.

Enthält die Komponente A als polymerisierbare Chelatliganden Acrylsäure, Methacrylsäure oder eine andere geeignete Carbonsäure, so tritt bei dem Zusammengeben der beiden Komponenten A und B zwischen dieser Carbonsäure und dem durch die Hydrolyse des Silans (II) entstandenen Alkohol ROH eine Veresterung unter Freisetzung von Wasser ein, das dann ebenfalls die Hydrolyse der komplexierten metallorganischen Verbindung (I) bewirken kann.

Das Mengenverhältnis der beiden Hauptkomponenten A und B in der erfindungsgemäßen Beschichtungsmasse ist so zu wählen, daß das molare Verhältnis von Verbindung (II) zu Verbindung (I) zwischen 10:4 und 10:0.1 liegt, wobei bei bevorzugten Ausführungsformen des erfindungsgemäßen Verfahrens dieses Verhältnis zwischen 10:2.5 und 10:0.5 liegt.

Bei weiteren Ausführungsformen des erfindungsgemäßen Verfahrens werden mehrfach funktionelle Acrylate und/oder Methacrylate als Lackadditive zu den Komponenten A und/oder B der erfindungsgemäßen Beschichtungszusammensetzung zugesetzt. Dadurch wird die Haftung der resultierenden Beschichtung auf organischen Polymeren erhöht, und man erhält besonders gut haftende Beschichtungen sogar auf solchen Kunststoffen, die erfahrungsgemäß schlecht mit kratzfesten Schutzbeschichtungen zu beschichten sind, wie z.B. Polystyrol, Polymethylmethacrylat oder Polycarbonat.

Der Einsatz von mehrfach funktionellen Acrylaten und/oder Methacrylaten als Lackadditive bietet den weiteren Vorteil, daß dadurch ein engmaschiges Netzwerk mit hoher Oberflächenhärte in der resultierenden Beschichtung erzeugt wird. Dadurch ist es möglich, die Weichheit der resultierenden Beschichtung, die durch einen hohen organischen Anteil verursacht wird, aufzufangen. Weiterhin können die funktionellen Acrylate und/oder Methacrylate als Lösungsvermittler für hydrophobe Verunreinigungen des Substrates

wirken und so zu einer Verbesserung der Haftung beitragen.

Es ist möglich, die mehrfach funktionellen Acrylate und/oder Methacrylate dadurch in die Matrix der resultierenden Beschichtung einzubauen, daß man diese z.B. der Komponente B, also dem Hydrolysat des polymerisierbaren Alkoxysilans (II) zusetzt. Werden die mehrfach funktionellen Acrylate und/oder Methacrylate z.B. dem Hydrolysat B zugesetzt, so kann dies in einer Menge von bis zu 0.5 Mol, bevorzugt von 0.01 bis 0.2 Mol, bezogen auf ein Mol der Verbindung (II) erfolgen.

Je höher die Anzahl der Acrylat- bzw. der Methacrylat-Gruppen innerhalb des Moleküls ist, desto größer ist auch die Viskosität der Beschichtungsmasse. Dadurch können sich in Abhängigkeit vom jeweiligen Einzelfall Probleme bei der Applikation ergeben, z.B. wenn aufgrund des ungleichmässigen Verlaufs der Beschichtungsmasse die resultierende Schichtdicke für den entsprechenden Anwendungsfall zu stark variiert. Bevorzugt werden deshalb mehrfach funktionelle Acrylate und/oder Methacrylate mit bis zu 5 Acrylat- bzw. Methacrylat-Gruppen, besonders bevorzugt werden solche mit 2 bis 5 funktionellen Gruppen.

Spezielle Beispiele für mehrfach funktionelle Acrylate und Methacrylate sind Tetraethylenglycoldiacrylat (TTEGDA), Triethylenglycoldiacrylat (TIEGDA), Polyethylenglycol-400-diacrylat (PEG400DA), 2,2-Bis(4-acryloxyethoxyphenyl)propan, Ethylenglycoldimethacrylat (EGDMA), Diethylenglycoldimethacrylat (DEGDMA), Triethylenglycoldimethacrylat (TRGDMA), Tetraethylenglycoldimethacrylat (TEGDMA), 1,3-Butandioldimethacrylat (1,3BDDMA), 1,4-Butandioldimethacrylat (1,4BDDMA), 1,6-Hexandioldimethacrylat (1,6HDDMA), 1,12-Dodecandioldimethacrylat (1,12DDDMA), Neopentylglycoldimethacrylat (NPGDMA), Trimethylolpropantrimethacrylat (TMPTMA) und 1,6-Hexandioldiacrylat (1,6HDDA).

Bevorzugte Beispiele für mehrfach funktionelle Acrylate und Methacrylate sind Ditrimethylolpropantetraacrylat (DTMP Tetraacrylat), Dipentaerythritolpentaacrylat, Pentaerythritoltriacrylat (PETIA), Polyethylenglycol-400-dimethacrylat (PEG400DMA), Bisphenol-A-dimethacrylat (BADMA), Diurethandimethacrylat (HEMATMDI) und Trimethylolpropantriacrylat (TMPTA).

Als weitere Komponente enthält die erfindungsgemäße Beschichtungsmasse 0.1 bis 5 Gew.-% eines Initiators für die Polymerisation. Wird die erfindungsgemäße Beschichtungsmasse durch UV-Strahlung gehärtet, so werden dieser Photoinitiatoren zugesetzt. Die erfindungsgemäß verwendeten Photoinitiatoren sind Arylketone, wie z.B. Acetophenon oder Benzophenon oder substituierte Acetophenone, wie z.B. 1,1,1-Trichloroacetophenon oder Diethoxyacetophenon, insbesondere hydroxy-substituierte Acetophenone sind besonders wirksam. Es können aber auch substituierte Cyclohexylphenylketone eingesetzt werden. Beispiele hierfür sind Irgacure 184 (1-Hydroxycyclohexylphenylketon), Irgacure 500 (1-Hydroxycyclohexylphenylketon, Benzophenon) und Irgacure 907 (2-Methyl-1-[4-(methylthio)-phenyl]-2-morpholino-propan-1-on) der Firma Ciba-Geigy, Darocure 1173 (2-Hydroxy-2-methyl-1-phenyl-propan-1-on) und Darocure 1116 (1-(4-Isopropylphenyl)-2-hydroxy-2-methylpropan-1-on) der Firma Merck. Ferner 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal und Dibenzosuberon.

Als thermische Initiatoren kommen insbesondere organische Peroxide in Form von Diacylperoxiden (z.B. Acetyl-cyclohexan-sulfonylperoxid, Bis(2.4-dichlorbenzoyl)peroxid, Diisononanoylperoxid, Dioctanoylperoxid, Diacetylperoxid oder Dibenzoylperoxid), von Peroxy-Dicarbonaten (z.B. Diisopropyl-peroxydicarbonat, Di-n-butylperoxydicarbonat, Di-2-ethylhexyl-peroxydicarbonat oder Dicyclohexyl-peroxydicarbonat), von Alkylperestern (z.B. Cumyl-perneodecanoat, t-Butyl-perneodecanoat, t-Amyl-perpivalat, t-Butyl-per-2-ethylhexanoat, t-Butyl-perisobutyrat oder t-Butylperbenzoat), von Dialkylperoxiden (z.B. Dicumylperoxid, t-Butylcumylperoxid, 2.5-Dimethylhexan-2.5-di-t-butylperoxid, Di(t-butylperoxy-isopropyl)benzol, Di-t-butylperoxid oder 2.5-Dimethylhexin-3-2.5-di-t-butylperoxid), von Perketalen (z.B. 1.1-Bis(t-butylperoxy)-3.3.5-trimethylcyclohexan, 1.1-Bis(t-butylperoxy)-cyclohexan oder 2.2-Bis(t-butylperoxy)butan), von Ketonperoxiden (z.B. Cyclohexanonperoxid, Methylisobutylketonperoxid, Methylethylketonperoxid oder Acetylacetonperoxid) und von Alkylhydroperoxiden (z.B. Pinanhydroperoxid, Cumolhydroperoxid, 2.5-Dimethylhexan-2.5-dihydroperoxid oder t-Butylhydroperoxid) in Frage, Azoverbindungen (z.B. Azobisisobutyronitril) oder reine Kohlenwasserstoffe (z.B. 2.3-Dimethyl-2.3-diphenylbutan oder 3.4-Dimethyl-3.4-diphenylbutan).

Gegebenenfalls können der erfindungsgemäßen Beschichtungsmasse übliche Lackadditive zugesetzt werden, wie z.B. organische Verdünnungsmittel, Verlaufmittel, Färbemittel (Farbstoffe oder Pigmente), UV-Stabilisatoren, Füllstoffe, Viskositätsregler oder Oxidationsinhibitoren.

Zur Beschichtung werden übliche Beschichtungsverfahren angewendet, wie z.B. Tauchen, Fluten, Gießen, Schleudern, Spritzen, oder Streichen. Die Beschichtung wird auf das Substrat in Schichtdicken von z.B. 0.1 bis 25 $\mu$m, vorzugsweise von 1 bis 20 $\mu$m und insbesondere von 3 bis 15 $\mu$m aufgetragen. Es ist auch möglich aber nicht erforderlich, das Substrat vor dem Aufbringen der erfindungsgemäßen Beschichtungsmasse mit einem Haftvermittler oder einer Primerschicht zu grundieren.

Die Viskosität der erfindungsgemäßen Beschichtungsmasse kann durch die Zugabe von inerten

Lösungsmitteln so eingestellt werden, daß eine Schleuderbeschichtung von planaren Substraten möglich ist. Somit können mit Hilfe des erfindungsgemässen Verfahrens z.B. aluminiumbedampfte Polycarbonat-Scheiben (CDs) in einer Tauchschleuderbeschichtung mit einer schwitzwasserstabilen, abrieb-, kratz- und haftfesten Beschichtung versehen werden.

Die aufgetragene Beschichtungsmasse wird gegebenenfalls getrocknet und anschließend gehärtet. Erfolgt die Härtung durch UV-Strahlung, so kann diese ohne Einschränkung der Allgemeinheit z.B. zwischen 10 und 20 Sekunden bei 2400 Watt erfolgen, andere Strahlungsmengen und/oder -zeiten sind ebenfalls möglich. Werden z.B. aluminiumbedampfte Polycarbonat-Scheiben (CDs) mit der erfindungsgemäßen Beschichtung versehen, so hat sich eine UV-Bestrahlung von 5 Sekunden mit 4000 Watt als erfolgreich erwiesen.

Erfolgt die Härtung thermisch, so kann dies ohne Einschränkung der Allgemeinheit dadurch geschehen, daß die Beschichtung z.B. zwischen 15 und 60 Minuten bei einer Temperatur von 130 °C gehalten wird. In Abhängigkeit von der thermischen Resistenz des Substrates und der erfindungsgemäßen Beschichtung sind andere Temperaturen und Standzeiten ebenfalls möglich.

Bei einer kombinierten UV/IR- bzw. IR/UV-Härtung kann ohne Einschränkung der Allgemeinheit das Substrat z.B. zuerst 10 Sekunden lang einer UV-Strahlung von 2400 Watt ausgesetzt und anschließend 30 Minuten bei einer Temperatur von 130 °C gehalten werden, oder aber es kann zuerst 90 Minuten bei einer Temperatur von 80 °C gehalten und anschließend 20 Sekunden lang einer UV-Strahlung von 1000 Watt ausgesetzt werden. Andere Temperaturen, Standzeiten und Strahlungsenergien sind ebenfalls möglich. Werden z.B. aluminiumbedampfte Polycarbonat-Scheiben (CDs) mit der erfindungsgemäßen Beschichtung versehen, so hat sich eine UV-Bestrahlung von 10 Sekunden mit 2400 Watt und eine anschließende thermische Härtung von 30 Minuten bei einer Temperatur von 70 °C als erfolgreich erwiesen.

Die kurzen UV-Kontaktzeiten ermöglichen es, die erfindungsgemäßen Beschichtungsmassen problemlos in bestehende Produktionsverfahren zu integrieren (in-line-Fertigung). Als Beispiele können hier die Lackierungen von Datonträgern aus Polycarbonat (Compact Disks, CDs), von magnetooptischen Datenspeichern (MOs), von Bildplatten etc. genannt werden.

Geeignete Zwischenprodukte (= Komponente A) zur Herstellung der erfindungsgemäßen Beschichtungsmassen bestehen aus einer Lösung einer komplexierten, metallorganischen Verbindung mit polymerisierbaren Liganden, und können z.B. dadurch erhalten werden, daß man eine metallorganische Verbindung der allgemeinen Formel (I),

$MR_4$ (I)

mit einem oder mehreren einfach oder mehrfach ethylenisch ungesättigten Chelatbildnern umsetzt, die über mindestens 2 Sauerstoff-Donoratome verfügen, und die in einer Menge von 0.5 bis 10 Mol, bevorzugt von 1 bis 2.5 Mol, bezogen auf 1 mol $MR_4$ als Komplexbildner zugesetzt werden.

Die Reste R in der allgemeinen Formel (I) können gleich oder verschieden sein, M bedeutet Titan oder Zirkon, und R bedeutet Halogen, OH oder OR'. Das Halogen kann Chlor oder Brom sein und R' Alkyl, Alkenyl, Alkinyl oder Acyl, jeweils mit 1 bis 18, bevorzugt mit 1 bis 4 C-Atomen.

Bei bevorzugten Ausführungsformen der erfindungsgemäßen Zwischenprodukte sind die Chelatbildner polymerisierbare $\beta$- Diketone, polymerisierbare Carbonsäuren, polymerisierbare Glycole oder eine Mischung derselben. Bei besonders bevorzugten Ausführungsformen wird als Chelatbildner eine Acrylsäure oder eine Methacrylsäure eingesetzt.

Geeignete metallorganische Verbindungen $MR_4$ und geeignete Chelatbildner sowie die Herstellung der erfindungsgemäßen Zwischenprodukte wurden bereits bei der Beschreibung der erfindungsgemäßen Boschichtungsmassen ausführlich erläutert.

Die Umsetzung der metallorganischen Verbindung $MR_4$ kann mit und ohne Lösungmittel durchgeführt werden. Eine zusätzliche Zugabe eines inerten Lösungsmittels ist in den meisten Fällen nicht erforderlich, da die metallorganischen Verbindungen $MR_4$ in der Regel als alkoholische Lösungen käuflich erwerbbar sind, sodaß nach der Umsetzung mit dem polymerisierbaren Chelatbildner eine alkoholische Lösung der komplexierten metallorganischen Verbindung $MR_4$ vorliegt. Die Zugabe eines inerten Lösungsmittels ist nur dann erforderlich, wenn die Viskosität des erfindungsgemäßen Zwischenproduktes zu hoch sein sollte.

Diese erfindungsgemäße Lösung der komplexierten metallorganischen Verbindung $MR_4$ ist unter Ausschluß von UV-Strahlung, Wärme und Wasser lagerstabil.

Weitere Ausführungsformen der erfindungsgemäßen Zwischenprodukte enthalten als Lackadditiv pro Mol Verbindung (I) bis zu 2.5 Mol, bevorzugt 1.0 bis 0.05 Mol eines mehrfach funktionellen Acrylats und/oder eines mehrfach funktionellen Methacrylats, welches bis zu 5 Acrylat- und/oder Methacrylat-Gruppen aufweist. Geeignete mehrfach funktionelle Acrylate und mehrfach funktionelle Methacrylate wurden

bereits bei der Beschreibung der erfindungsgemäßen Beschichtungsmassen ausführlich erläutert. Bevorzugte mehrfach funktionelle Acrylate sind 1,1,1-Tris(hydroxymethyl)-propantriacrylat, Di(trimethylol)-propantetraacrylat, Di(pentaerythritol)-pentaacrylat oder Pentaerythritol-triacrylat.

Geeignete Zwischenprodukte (= Komponente B) zur Herstellung der erfindungsgemäßen Beschichtungsmassen bestehen aus einem Hydrolysat eines oder mehrerer radikalisch polymerisierbarer Alkoxysilane. Dieses Hydrolysat kann z.B. dadurch erhalten werden, daß man eines oder mehrere radikalisch polymerisierbare Alkoxysilane der allgemeinen Formel (II) hydrolysiert, wobei man die Hydrolyse, gegebenenfalls in einem inerten Lösungsmittel, mit einer geringeren Menge, aber mindestens der halben, zur vollständigen Hydrolyse aller Alkoxy-Gruppen erforderlichen Wassermenge durchführt.

$$SiR_n(R^1{-}O{-}\underset{\underset{O}{\|}}{C}{-}\underset{\underset{R^2}{|}}{C}{=}CH_2)_{4-n} \qquad (II)$$

In der allgemeinen Formel (II) hat n die Werte 2 oder 3, und die Reste R, $R^1$ und $R^2$ sind jeweils gleich oder verschieden. R hat die gleiche Bedeutung wie in Formel (I), $R^1$ stellt einen Alkylenrest mit 1 bis 8 C-Atomen, und $R^2$ ein H-Atom oder einen Kohlenwasserstoffrest, vorzugsweise einen Alkylrest, mit 1 bis 8 C-Atomen dar.

Geeignete polymerisierbare Alkoxysilane und die Herstellung der erfindungsgemäßen Zwischenprodukte wurden bereits bei der Beschreibung der erfindungsgemäßen Beschichtungsmassen ausführlich erläutert. Bei bevorzugten Ausführungsformen ist das polymerisierbare Alkoxysilan ein 3-Methacryloxypropyltrialkoxysilan oder ein 3-Acryloxypropyltrialkoxysilan.

Die Hydrolyse der polymerisierbaren Alkoxysilane kann mit und ohne Lösungsmittel durchgeführt werden, wobei Wasser nicht als Lösungsmittel angesehen wird, sondern als Reaktant. Die Zugabe eines inerten Lösungsmittels ist nicht unbedingt erforderlich, da bei der Hydrolyse der Alkoxysilane R'OH freigesetzt werden, welche im Reaktionsmedium die Funktion eines Lösungsmittels übernehmen. Die Zugabe eines Lösungsmittels ist nur dann erforderlich, wenn die Viskosität der erfindungsgemäßen Zwischenprodukte zu hoch sein sollte.

Weitere Ausführungsformen der erfindungsgemäßen Zwischenprodukte enthalten als Lackadditiv pro Mol Verbindung II bis zu 0.5 Mol, bevorzugt 0.2 bis 0.01 Mol eines mehrfach funktionellen Acrylats und/oder eines mehrfach funktionellen Methacrylats, welches bis zu 5 Acrylat- und/oder Methacrylatgruppen aufweist. Geeignete mehrfach funktionelle Acrylate und mehrfach funktionelle Methacrylate wurden bereits bei der Beschreibung der erfindungsgemäßen Beschichtungsmassen ausführlich erläutert. Bevorzugte mehrfach funktionelle Acrylate sind 1,1,1-Tris(hydroxymethyl)-propantriacrylat, Di(trimethylol)-propantetraacrylat, Di-(pentaerythritol)-pentaacrylat oder Pentaerythritol-triacrylat.

Dieses erfindungsgemäße Hydrolysat des polymerisierbaren Alkoxysilans ist unter Ausschluß von UV-Strahlung und Wärme lagerstabil.

Im folgenden werden die erfindungsgemäßen Beschichtungsmassen anhand von Ausführungsbeispielen näher erläutert.

Es werden verschiedene Substrate mit verschieden zusammengesetzten, erfindungsgemäßen Beschichtungsmassen beschichtet, die thermisch, durch UV-Strahlung oder durch kombinierte IR/UV-Strahlung gehärtet und deren Härte, Abriebfestigkeit, Haftung und Beständigkeit nach Lagerung im Feuchtklima bewertet werden.

## UV-Härtung

Die UV-Härtungen wurden mit einem Durchlauf-UV-Gerät der Fa. Beltron (Typ 22/III) ausgeführt. Die entsprechenden Kenndaten lauten:

- Strahlerleistung bis zu 4000 W (400 Watt/cm)
- variable Bandlaufgeschwindigkeit (0.2 bis 36.0 m/min)

## Bestimmung der Abriebfestigkeit (DIN 52347)

Diese Verschleißprüfung nach dem Reibradverfahren dient zur Prüfung des Verhaltens von Glas und durchsichtigem Kunststoff gegen Gleitverschleiß. Die Prüfung wird an ebenen Flächen durchgeführt. Als Meßgröße dient die Zunahme des Streulichtes. Die Probe wird, auf dem Drehteller des Verschleiß-Prüfgerätes liegend, durch zwei sich in entgegengesetzter Richtung drehende Reibräder auf Gleitverschleiß beansprucht (100 Zyklen). Die Reibräder bestehen aus einem definierten feinkörnigen Schleifmittel ($Al_2O_3$), das in Gummi eingebettet ist. Als Meßgröße für den Verschleiß dient die Zunahme der Streuung des transmittierten Lichtes, die durch die Oberflächenveränderung während des Verschleißversuches bedingt ist. Sie ist zu messen als Grad der gestreuten Transmission $\tau_d$ oder als Trübung $T_d$.

Bestimmung der Abriebfestigkeit durch Frank-Abriebprüfmaschine

Karl Frank GMBH, Weinheim-Birkenau; Reibradtyp: CS10F; Belastung: 2.5 N; 50 Umdrehungen (U) bei 60 U/min

Beurteilung der Haftung zum Substrat

Die Haftung der Beschichtung zum Untergrund wurde nach drei verschiedenen Verfahren getestet:

a) Tesafilm-Abrißtest zur Überprüfung der Randhaftung

Ein Streifen eines handelsüblichen Tesafilms (Tesafix 6996) wird am Rand des Substrates an einer unbeschädigten Stelle des Lackfilmes aufgebracht, luftblasenfrei festgedrückt und dann unter einem Winkel von 90 ° ruckartig abgezogen. Sowohl der Tesastreifen, als auch die so behandelte Lackoberfläche wird auf vorhandenes bzw. abgezogenes Beschichtungsmaterial untersucht. Der Test kann mit neuem Tesafilm an der gleichen Stelle des beschichteten Substrates beliebig wiederholt werden (bis zu 20 x).

b) Gitterschnitt-Prüfung (DIN 53151)

Der Gitterschnitt-Test ist eine einfache empirische Prüfung zur Beurteilung des Haftens von Lacken auf ihrem Untergrund. Ferner können die Sprödigkeit und andere Festigkeitseigenschaften des Lackes beurteilt werden. Hierzu wird mit einem Mehrschneidengerät ein bis auf den Untergrund durchgehendes Schnittmuster mit sechs Schnitten gezogen, so daß ein Gitter mit 25 Quadraten entsteht. Durch mikroskopische Betrachtung der Quadrate und ihren Vergleich mit Referenzbildern werden Gitterschnitt-Kennwerte von Gt 0 (sehr gute Haftung) bis Gt 5 (sehr schlechte Haftung) erhalten.

c) Tape Test (ASTM D 3359)

Diese Prüfung entspricht DIN 53151; vor Beurteilung des Schnittmusters wird jedoch ein Streifen eines handelsüblichen Tesafilms auf der Schnittstelle angebracht und schnell unter einem Winkel von 90 ° abgezogen. Die anschließende Beurteilung erfolgt nach dem oben erwähnten Prinzip.

"Schwitzwasser-Test" (DIN 50017)

Die beschichtete Probe wird 14 Tage lang in einem Wärmeschrank bei 40 °C unter hoher Luftfeuchtigkeit gelagert. Anschließend wird die Haftung beurteilt und und die Ritzhärte bestimmt. Liegen die gefundenen Werte im gleichen Bereich (der Gitterschnitt-Kennwert darf höchstens um eine Einheit abnehmen), wird der Test als bestanden gewertet.

Die im Folgenden verwendeten Abkürzungen

| | |
|---|---|
| AIBN : | Azoisobutyronitril |
| DBP : | Dibenzoylperoxid |
| IR 184 : | 1-Hydroxy-cyclohexyl-phenylketon |
| MAS : | Methacrylsäure |
| MEMO : | 3-Methacryloxypropyltrimethoxysilan |
| PC : | Polycarbonat |
| PMMA : | Polymethylmethacrylat |
| Sart. 355 : | Sartomer 355 (Ditrimethylolpropantetraacrylat) der Fa. Craynor |
| Sart. 399 : | Sartomer 399 (Dipentaerythritolpentaacrylat) der Fa. Craynor |
| TBPEH : | t-Butyl-per-2-ethylhexanoat |
| TMPTA : | 1,1,1-Tris(hydroxymethyl)-propantriacrylat |

Die im Folgenden verwendeten Lacksysteme basieren auf MEMO und Zirkonmethacrylat und werden wie folgt hergestellt.

1 Mol MEMO wird bei Raumtemperatur mit bis zu 2 Mol Wasser (bezogen auf MEMO) versetzt. Das Hydrolysat ist lagerstabil. Nach der Hydrolyse des MEMO (ca. 24 Stunden) wird die komplexierte Zirkonkomponente (bis zu 0.3 Mol bezogen auf MEMO) zugegeben. An dieser Stelle ist es möglich, weitere Mengen von Wasser zuzugeben (bis zu 2 Mol pro Zirkonkomponente).

Die komplexierte Zirkonkomponente wird erhalten durch Reaktion von $Zr(OPr)_4$ mit destillierter Methacrylsäure (bis zu 2 Mol bezogen auf $Zr(OPr)_4$). Die mit Methacrylsäure komplexierte Zirkonverbindung ist lagerstabil und kann sowohl in Lösung als auch in fester Form zugesetzt werden.

Wahlweise wird hierzu ein funktionelles (Meth)acrylat mit 1 bis 5 (Meth)acrylat-Gruppen zugegeben. Das funktionelle (Meth)acrylat kann auch zum MEMO-Hydrolysat zugegeben werden. Auch diese Lösung ist lagerstabil.

Das MEMO-Hydrolysat, die komplexierte Zirkonverbindung und der Starter für die Polymerisation werden vermischt, auf das Substrat aufgetragen und gehärtet. Anschließend wird die Beschichtung nach den oben genannten Verfahren untersucht. Die nachfolgenden Tabellen enthalten die Ergebnisse.

Tabelle 1

| Verwendete Lacke | | | | |
|---|---|---|---|---|
| Lack | I | II | III | IV |
| Lackart | 10 MEMO<br>1 Zr(MAS) | 10 MEMO<br>2 Zr(MAS) | 10 MEMO<br>2 Zr(MAS) | 10 MEMO<br>2 $Zr(MAS)_2$ |
| Starter | 1% IR 184 | 1% AIBN | 1% TBPEH | 1% IR 184 |

Die Lacke I bis IV werden weder mit Additiven versehen noch mit Lösungsmitteln verdünnt. Die Lacke I bis IV werden im Tauchverfahren auf PC-Scheiben aufgetragen.

Tabelle 2

| Härtung und Eigenschaften der Lacke I bis IV | | | | |
|---|---|---|---|---|
| Lack | I | II | III | IV |
| Härtung | 10 s UV<br>2400 W | 45 min<br>130 °C | 60 min<br>130 °C | 10 s UV<br>2400 W + 30 min<br>130 °C |
| Schichtdicke<br>Streulichtverl. (in % Trübung)<br>Gitterschnitt<br>Tape-Test<br>Schwitzwasser-Test | 10 µm<br>2.0<br>Gt 0<br>Gt 0<br>beständig | 7 µm<br>2.7<br>Gt 0-1<br>Gt 0-1<br>beständig | 7 µm<br>2.1<br>Gt 0-1<br>Gt 0-1<br>beständig | 12 µm<br>1.6<br>Gt 0<br>Gt 0<br>beständig |

Mit allen in Tabelle 1 aufgeführten Lackvarianten wird eine auf Polycarbonat gut haftende, schwitzwasserstabile Schutzschicht erhalten. Die hier gewählten Lackvarianten können sowohl thermisch (Beispiel II,II), durch UV-Strahlung (Beispiel I) oder durch kombinierte UV/IR-Strahlung (Beispiel IV) gehärtet werden.

Tabelle 3

| Verwendete Lacke | | |
|---|---|---|
| Lack | V | VI |
| Lackart | 10 MEMO<br>2 $Zr(MAS)_2$ | 10 MEMO<br>2 $Zr(MAS)_2$ |
| Starter | 1% DBP | 1% DBP |

Die Lacke V und VI werden weder mit Additiven versehen noch mit Lösungsmitteln verdünnt. Die Lacke V und VI werden im Tauchverfahren auf PMMA-Scheiben aufgetragen.

Tabelle 4

| Härtung und Eigenschaften der Lacke V und VI | | |
|---|---|---|
| Lack | V | VI |
| Härtung | 90 min 80 °C +<br>20 s UV / 1000 W | 90 min 80 °C +<br>20 s UV / 1000 W |
| Streulichtverl. (in % Trübung)<br>Gitterschnitt<br>Tape-Test<br>Schwitzwasser-Test | 1.7<br>Gt 0<br>Gt 0<br>beständig | 1.9<br>Gt 0<br>Gt 0<br>beständig |

Die Beschichtung mit Lack VI führt auch auf Polycarbonat nach rein thermischer Aushärtung (3 Stunden, 130 °C) zu guten Abriebbeständigkeiten (2.3 % Lichtstreuung im Taber Abraser Test). Die gleiche Abriebbeständigkeit wird jedoch auch erreicht, wenn die beschichtete PC-Scheibe thermisch vorgehärtet wird (30 min, 130 °C) und anschließend mit UV-Strahlung (1000 W, 60 s) nachgehärtet wird. Die Beschichtung ist unabhängig von der Härtung schwitzwasserstabil.

Die Beschichtung mit Lack VI führt auch auf Acryl-Butadien-Styrol-Substraten mit einer kombinierten thermischen (90 min 70 °C) und UV-Härtung (2 mal 2000 W) zu abriebfesten und schwitzwasserstabilen Beschichtungen.

Tabelle 5: Eigenschaften von Lack I auf Al-bedampften PC-Scheiben (CDs)
Härtung: 10 s UV / 2000 W, 30 min 70 °C

| Substrat | PC-Seite | Al-bedampfte Seite |
|---|---|---|
| Schichtdicke | 22/2 µm | 22/2 µm |
| Streulichtverlust | 1.8 | 1.2 |
| Gitterschnitt | Gt 0 | Gt 1 |
| Tape-Test | Gt 1 | Gt 3 |
| Schwitzwasser-Test | beständig | beständig |

Tabelle 6: Eigenschaften von Lack IV auf aluminiumbedampften PC-Scheiben (CDs)
Härtung: 10 s UV / 2400 W + 30 min 70 °C

| Substrat | PC-Seite | Al-bedampfte Seite |
|---|---|---|
| Schichtdicke | 13 µm | 13 µm |
| Streulichtverlust | 1.5 | 1.2 |
| Gitterschnitt | Gt 0 | Gt 1 |
| Tape-Test | Gt 0 | Gt 2 |
| Schwitzwasser-Test | beständig | beständig |

Die CDs wurden mit Lack I (Tabelle 5) und mit Lack IV (Tabelle 6) in einem Tauchschleuderverfahren beschichtet. Obwohl die Lackvariante IV mit einem höheren Anteil an Zirkonmethacrylat auf den überprüften CDs bessere Eigenschaften aufweist, sind auch die für die Lackvariante I erzielten Ergebnisse sehr gut.

Im weiteren werden Lackrezepturen beschrieben, die rein durch UV-Strahlung ausgehärtet werden können und zu guten kratzfesten Beschichten, z.B. auf CDs führen. Ausgehend von der Lackkomposition IV werden durch Einbringen von Acrylaten weitere Lackvarianten hergestellt.

Tabelle 7

| Verwendete Lacke | | | |
|---|---|---|---|
| Lack | VII | VIII | IX |
| Lackart | 10 MEMO<br>2 $Zr(MAS)_2$<br>2 Sart. 355 | 10 MEMO<br>2 $Zr(MAS)_2$<br>1 Sart. 399 | 10 MEMO<br>2 $Zr(MAS)_2$<br>- |
| Starter | 2% IR 184 | 2% IR 184 | 2% IR 184 |

Die Lacke werden weder mit Additiven versehen noch mit Lösungsmitteln verdünnt. Die unbehandelten CDs (Al-bedampfte PC-Scheiben) werden durch ein Tauchschleuderverfahren beschichtet.

Tabelle 8: Eigenschaften der Lacke VII bis IX auf aluminium-bedampften PC-Scheiben (CDs), PC-Seite
Härtung: 5 s UV / 4000 W

| Lack | VII | VIII | IX |
|---|---|---|---|
| Gitterschnitt | Gt 0 | Gt 0-1 | Gt 1-3 |
| Tape-Test | Gt 1 | Gt 1 | - |
| Randhaftung | O.K. (20x) | O.K. (20x) | schwankend |
| Schwitzwassertest | beständig | beständig | beständig |
| Abziehkraft | 2 N | - | - |
| Lösungsmittel-beständigkeit | | | |
| 1) Ethanol | O.K. | - | O.K. |
| 2) Aceton | O.K. | - | O.K. |
| Abriebtest | Note 9 | - | Note 9 |

Beim Abriebtest an der Frank-Maschine erreicht ungeschütztes Polycarbonat in einer Skala von 1 bis 10 die Note 1, handelsübliche UV-Lacke Werte zwischen 5 und 7.

Durch den Einsatz der Mehrfachacrylate in das MEMO/Zirkon/Methacrylsäure-Hydrolysat erhöht sich die Haftfestigkeit der Beschichtung auch auf der metallisierten Seite der CD. Für die Lackvarianten VII und VIII werden auch auf der Al-bedampften Seite gute Randhaftungen beobachtet, während sich für die Lackvariante IX die Beschichtung auf der Al-bedampften Seite bereits beim ersten Tesafilm-Abriß löste.

Die Lösungsmittelbeständigkeit und die Abriebbeständigkeit für die Lackvarianten VII und IX sind in gleicher Weise auf der metallisierten wie auf der PC-Seite gegeben.

Die Schichtdicke von Lack VII erreichte folgende Werte: 5.34 µm innen und 5.12 µm am Außenrand der CD.

**Patentansprüche**

1. Verfahren zur Herstellung von UV- oder UV/IR- oder IR/UV-gehärteten Beschichtungen auf Substraten durch Auftragen einer Beschichtungsmasse auf das zu beschichtende Substrat und durch Einwirkung von UV-Strahlung oder von kombinierter UV/IR- oder kombinierter IR/UV-Strahlung auf das beschichtete Substrat, **dadurch gekennzeichnet,** daß man eine Beschichtungsmasse

   aus einer Komponente A,

   welche eine Lösung einer komplexierten, metallorganischen Verbindung mit polymerisierbaren Liganden darstellt, und welche erhalten worden ist durch Umsetzen, gegebenenfalls in einem inerten Lösungsmittel, einer metallorganischen Verbindung der allgemeinen Formel (I),

   $MR_4$ (I)

   in der die Reste R gleich oder verschieden sind, M = Ti oder Zr und R = Hal, OH, OR' oder O-$(CH_2$-$CH_2O$-$)_m$R' bedeuten, mit m = 1 bis 3, Hal = Cl oder Br und R' = Alkyl, Alkenyl, Alkinyl oder Acyl, jeweils mit 1 bis 18 C-Atomen,

   mit einem oder mehreren einfach oder mehrfach ethylenisch ungesättigten Chelatbildnern, die über mindestens 2 Sauerstoff-Donoratome verfügen, und die in einer Menge von 0.5 bis 10 Mol, bezogen auf 1 mol $MR_4$, als Komplexbildner eingesetzt worden sind,

aus einer Komponente B,

welche ein Hydrolysat eines oder mehrerer radikalisch polymerisierbarer Alkoxysilane darstellt, und welches erhalten worden ist durch Hydrolyse eines oder mehrerer radikalisch polymerisierbarer Alkoxysilane der allgemeinen Formel (II)

$$SiR_n(R^1\text{-}O\text{-}\underset{\underset{O}{\|}}{C}\text{-}\underset{\underset{R^2}{|}}{C}{=}CH_2)_{4-n} \qquad (II)$$

mit n = 2 oder 3, in der die Reste R, $R^1$ und $R^2$ jeweils gleich oder verschieden sind, R die gleiche Bedeutung wie in Formel (I) hat, $R^1$ einen Alkylenrest mit 1 bis 8 C-Atomen, und $R^2$ ein H-Atom oder einen Kohlenwasserstoffrest, vorzugsweise einen Alkylrest, mit 1 bis 8 C-Atomen darstellt,

wobei die Hydrolyse, gegebenenfalls in einem inerten Lösungsmittel, mit einer geringeren, aber mindestens der halben, zur vollständigen Hydrolyse aller Alkoxy-Gruppen erforderlichen Wassermenge durchgeführt wurde,

aus 0.1 bis 5 Gew.-% einer Komponente C,

welche einen Initiator für die Polymerisation darstellt,

und gegebenenfalls aus üblichen Additiven verwendet,

wobei das molare Verhältnis von hydrolysierbarer Verbindung (II) zu komplexierter Verbindung $MR_4$ zwischen 10:4 und 10:0.1 liegt.

**2.** Verfahren nach Anspruch 1, **dadurch gekennzeichnet,** daß man eine metallorganische Verbindung (I) und/oder ein radikalisch polymersierbares Alkoxysilan (II) einsetzt, bei dem R' = Alkyl, Alkenyl, Alkinyl oder Acyl mit jeweils mit 1 bis 6 C-Atomen bedeutet.

**3.** Verfahren nach Anspruch 1 oder 2, **dadurch gekennzeichnet,** daß man die einfach oder mehrfach ethylenisch ungesättigten Chelatbildner in Mengen von 1 bis 2.5 Mol, bezogen auf 1 mol $MR_4$, einsetzt.

**4.** Verfahren nach einem oder mehreren der Ansprüche 1 bis 3, **dadurch gekennzeichnet,** daß man eine Beschichtungsmasse einsetzt, deren molares Verhältnis von hydrolysierbarer Verbindung (II) zu komplexierter Verbindung $MR_4$ zwischen 10:2.5 und 10:0.5 liegt

**5.** Verfahren nach einem oder mehreren der Ansprüche 1 bis 4, **dadurch gekennzeichnet,** daß man Substrate aus Polycarbonat (PC), aus Polystyrol (PS), aus Polymethylmethacralyt (PMMA), aus Acryl-Butadien-Styrol (ABS), aus Polyvinylchlorid (PVC), aus Polyurethan (PUR), aus Polyethylen (PE), aus Polyethylenterephthalat (PET), aus metallisierten Kunststoffen oder aus Metallen beschichtet.

**6.** Verfahren nach einem oder mehreren der Ansprüche 1 bis 5, **dadurch gekennzeichnet,** daß man eine Beschichtungsmasse verwendet, in deren Komponente A die Verbindung $MR_4$ über zwei Sauerstoffatome eines polymerisierbaren $\beta$-Diketons, einer polymerisierbaren Carbonsäure, eines polymerisierbaren Glycols, oder einer Mischung derselben komplexiert wurde.

**7.** Verfahren nach Anspruch 6, **dadurch gekennzeichnet,** daß man eine Beschichtungsmasse verwendet, in deren Komponente A die Verbindung $MR_4$ mit einer Acrylsäure oder mit einer Methacrylsäure komplexiert wurde.

**8.** Verfahren nach einem oder mehreren der Ansprüche 1 bis 7, **dadurch gekennzeichnet,** daß man eine Beschichtungsmasse verwendet, deren Komponente A eine alkoholische Lösung der komplexierten Verbindung $MR_4$ darstellt.

**9.** Verfahren nach einem oder mehreren der Ansprüche 1 bis 8, **dadurch gekennzeichnet,** daß man eine Beschichtungsmasse verwendet, deren Komponente B ein Hydrolysat eines oder mehrerer 3-Methacryloxypropyltrialkoxysilane und/oder eines oder mehrerer 3-Acryloxypropyltrialkoxysilane enthält.

**10.** Verfahren nach einem oder mehreren der Ansprüche 1 bis 9, **dadurch gekennzeichnet,** daß man eine Beschichtungsmasse verwendet, deren Komponente A pro Mol Verbindung (I) bis zu 2.5 mol eines mehrfach funktionellen Acrylats und/oder Methacrylats enthält, welches bis zu 5 Acrylat- und/oder Methacrylat-Gruppen aufweist.

**11.** Verfahren nach einem oder mehreren der Ansprüche 1 bis 10, **dadurch gekennzeichnet,** daß man eine Beschichtungsmasse verwendet, deren Komponente B pro Mol Verbindung (II) bis zu 0.5 Mol eines mehrfach funktionellen Acrylats und/oder Methacrylats enthält, welches bis zu 5 Acrylat- und/oder Methacrylat-Gruppen aufweist.

**12.** Verfahren nach Anspruch 10 oder 11, **dadurch gekennzeichnet,** daß man eine Beschichtungsmasse verwendet, die 1,1,1-Tris(hydroxymethyl)-propantriacrylat, Di(trimethylol)-propantetraacrylat, Di-(pentaerythritol)-pentaacrylat oder Pentaerythritoltriacrylat enthält.

**13.** Mit einer UV- oder UV/IR- oder IR/UV gehärteten Beschichtung versehene Substrate, erhältlich nach einem Herstellungsverfahren nach einem oder mehreren der Ansprüche 1 bis 12.

**14.** UV- oder UV/IR- bzw. IR/UV-härtbare Beschichtungsmasse bestehend

aus einer Komponente A,

welche eine Lösung einer komplexierten, metallorganischen Verbindung mit polymerisierbaren Liganden darstellt, und welche erhalten worden ist durch Umsetzen, gegebenenfalls in einem inerten Lösungsmittel, einer metallorganischen Verbindung der allgemeinen Formel (I),

$MR_4$ (I)

in der die Reste R gleich oder verschieden sein können, M = Ti oder Zr und R = Hal, OH, OR' oder $O-(CH_2-CH_2O-)_mR'$ bedeuten, mit m = 1 bis 3, Hal = Cl oder Br und R' = Alkyl, Alkenyl, Alkinyl oder Acyl, jeweils mit 1 bis 18 C-Atomen,

mit einem oder mehreren einfach oder mehrfach ethylenisch ungesättigten Chelatbildnern, die über mindestens 2 Sauerstoff-Donoratome verfügen, und die in einer Menge von 0.5 bis 10 Mol, bezogen auf 1 mol $MR_4$, als Komplexbildner eingesetzt worden sind,

aus einer Komponente B,

welche ein Hydrolysat eines oder mehrerer radikalisch polymerisierbarer Alkoxysilane darstellt, und welches erhalten worden ist durch Hydrolyse eines oder mehrerer radikalisch polymerisierbarer Alkoxysilane der allgemeinen Formel (II)

$$SiR_n(R^1-O-\underset{\underset{O}{\|}}{C}-\underset{\underset{R^2}{|}}{C}=CH_2)_{4-n} \qquad (II)$$

mit n = 2 oder 3, in der die Reste R, $R^1$ und $R^2$ jeweils gleich oder verschieden sind, R die gleiche Bedeutung wie in Formel (I) hat, $R^1$ einen Alkylenrest mit 1 bis 8 C-Atomen, und $R^2$ ein H-Atom oder einen Kohlenwasserstoffrest, vorzugsweise einen Alkylrest, mit 1 bis 8 C-Atomen darstellt,

wobei die Hydrolyse, gegebenenfalls in einem inerten Lösungsmittel, mit einer geringeren, aber mindestens der halben, zur vollständigen Hydrolyse aller Alkoxy-Gruppen erforderlichen Wassermenge durchgeführt wurde,

aus 0.1 bis 5 Gew.-% einer Komponente C,

welche einen Initiator für die Polymerisation darstellt,

und gegebenenfalls aus üblichen Additiven,

wobei das molare Verhältnis von hydrolysierbarer Verbindung (II) zu komplexierter Verbindung $MR_4$ in der Beschichtungsmasse zwischen 10:4 und 10:0.1 liegt.

**15.** Beschichtungsmasse nach Anspruch 14, **dadurch gekennzeichnet,** daß sie eine metallorganische Verbindung (I) und/oder ein radikalisch polymersierbares Alkoxysilan (II) enthält, bei der bzw. bei dem R' = Alkyl, Alkenyl, Alkinyl oder Acyl mit jeweils mit 1 bis 6 C-Atomen bedeutet.

**16.** Beschichtungsmasse nach Anspruch 14 oder 15, **dadurch gekennzeichnet,** daß die Komponente A die einfach oder mehrfach ethylenisch ungesättigten Chelatbildner in Mengen von 1 bis 2.5 Mol, bezogen auf 1 mol $MR_4$, enthält.

**17.** Beschichtungsmasse nach einem oder mehreren der Ansprüche 14 bis 16, **dadurch gekennzeichnet,** daß deren molares Verhältnis von hydrolysierbarer Verbindung (II) zu komplexierter Verbindung $MR_4$ zwischen 10:2.5 und 10:0.5 liegt

**18.** Beschichtungsmasse nach einem oder mehreren der Ansprüche 14 bis 17, **dadurch gekennzeichnet,** daß in deren Komponente A die Verbindung $MR_4$ über zwei Sauerstoffatome eines polymerisierbaren $\beta$-Diketons, einer polymerisierbaren Carbonsäure, eines polymerisierbaren Glycols, oder einer Mischung derselben komplexiert ist.

**19.** Beschichtungsmasse nach Anspruch 18, **dadurch gekennzeichnet,** daß die Verbindung $MR_4$ mit einer Acrylsäure oder mit einer Methacrylsäure komplexiert ist.

**20.** Beschichtungsmasse nach einem oder mehreren der Ansprüche 14 bis 19, **dadurch gekennzeichnet,** daß deren Komponente A eine alkoholische Lösung der komplexierten Verbindung $MR_4$ darstellt.

**21.** Beschichtungsmasse nach einem oder mehreren der Ansprüche 14 bis 20, **dadurch gekennzeichnet,** daß deren Komponente B ein Hydrolysat eines oder mehrerer 3-Methacryloxypropyltrialkoxysilane und/oder eines oder mehrerer 3-Acryloxypropyltrialkoxysilane enthält.

**22.** Beschichtungsmasse nach einem oder mehreren der Ansprüche 14 bis 21, **dadurch gekennzeichnet,** daß deren Komponente A pro Mol Verbindung (I) bis zu 2.5 Mol eines mehrfach funktionellen Acrylats und/oder Methacrylats enthält, welches bis zu 5 Acrylat- und/oder Methacrylat-Gruppen aufweist.

**23.** Beschichtungsmasse nach einem oder mehreren der Ansprüche 14 bis 22, **dadurch gekennzeichnet,** daß deren Komponente B pro Mol Verbindung (II) bis 0.5 Mol eines mehrfach funktionellen Acrylats und/oder Methacrylats enthält, welches bis zu 5 Acrylat- und/oder Methacrylat-Gruppen aufweist.

**24.** Beschichtungsmasse nach Anspruch 22 oder 23, **dadurch gekennzeichnet,** daß sie 1,1,1-Tris-(hydroxymethyl)-propantriacrylat, Di-(trimethylol)-propantetraacrylat, Di(pentaerythritol)-pentaacrylat oder Pentaerythritoltriacrylat enthält.

Europäisches Patentamt

# EUROPÄISCHER RECHERCHENBERICHT

Nummer der Anmeldung

EP 92 11 0020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 358 153 (KANSAI PAINT)<br>* Seite 10, Zeile 55; Anspruch 1 *<br>--- | 1-6,8,9, 13-18, 20,21 | C09D183/06<br>C08K5/00 |
| X | DE-A-3 838 330 (KANSAI PAINT)<br>* Seite 12, Zeile 30 - Zeile 33; Anspruch 1 *<br>--- | 1-6,8,9, 13-18, 20,21 | |
| X,D | DE-A-3 917 535 (FRAUNHOFER-GESELLSCHAFT)<br>* Seite 3, Zeile 68; Anspruch 1 *<br>--- | 1-6,8,9, 13-18, 20,21 | |
| X | EP-A-0 373 451 (FRAUNHOFER-GESELLSCHAFT) | 1-6,8,9, 13-18, 20,21 | |
| D | & EP-A-0 171 493<br>* Spalte 2, Zeile 50 - Zeile 55 *<br>* Spalte 3; Anspruch 1 *<br>----- | | **RECHERCHIERTE SACHGEBIETE (Int. Cl.5)**<br>C09D<br>C08K |

Der vorliegende Recherchenbericht wurde für alle Patentansprüche erstellt

| Recherchenort | Abschlußdatum der Recherche | Prüfer |
|---|---|---|
| DEN HAAG | 12 NOVEMBER 1992 | LENTZ J.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)